# FASCICULE DE BREVET EUROPEEN

(11) **EP 2 199 630 B1**
(45) Date de publication et mention de la délivrance du brevet: **16.12.2015**
(21) Numéro de dépôt: 09179752.2
(22) Date de dépôt: 17.12.2009
(51) Int. Cl.: F16B 21/06, F16B 21/09

(54) **Structure de retenue d'un élément d'attache**
Haltestruktur für ein Befestigungselement
Holding structure for a fastening element

(30) Priorité: 17.12.2008 FR 0858717
(43) Date de publication de la demande: 23.06.2010
(73) Titulaire: EUROSTYLE SYSTEMS, 36000 Châteauroux (FR)
(72) Inventeur: Durand, Jean-Michel, 36120, Etrechet (FR); Guyot, Robert, 36330, Le Poiconnet (FR)
(74) Mandataire: Thinat, Michel

(56) Documents cités:
- EP-A- 0 274 683
- US-A- 3 288 192

## Description

La présente invention concerne une structure de retenue d'un élément d'attache telle que décrite au préambule de la revendication principale. Une structure comparable est connue du document EP 0 274 683 A1.

De nombreuses pièces en matière plastique sont utilisées dans la fabrication des véhicules automobiles. Ces pièces, qui peuvent être par exemple des panneaux de garniture intérieure ou des pare-chocs, sont généralement fixées à des éléments métalliques de la carrosserie ou de la structure du véhicule. Cette fixation est souvent faite par des agrafes présentant un pied d'ancrage lié à la pièce plastique et une portion de solidarisation bloquée dans un trou correspondant de l'élément de carrosserie ou de la structure métallique.

L'assemblage de la pièce plastique au véhicule se fait en deux temps. Dans un premier temps, un opérateur met en place les agrafes sur la pièce plastique. Pour cela, il insère le pied d'ancrage de chaque agrafe dans une structure de retenue correspondante de la pièce plastique. Dans un second temps, la pièce plastique est mise en place dans le véhicule en faisant rentrer en force les portions de solidarisation de chacune des agrafes dans les ouvertures correspondantes de la carrosserie ou de la structure métallique du véhicule.

Pour éviter que les agrafes ne tombent de leur structure de retenue avant que la pièce plastique soit assemblée au véhicule, il est nécessaire qu'elles soient convenablement bloquées dans la structure de retenue. Ce blocage impose un effort relativement important lors de l'insertion du pied d'ancrage de l'agrafe dans la structure de retenue, ce qui rend fastidieuse et pénible l'introduction des pieds d'ancrage des agrafes dans les structures de retenue correspondantes.

Par ailleurs, un écart de dimensionnement des éléments de blocage peut entrainer une très grande difficulté pour cette introduction ou, au contraire, une mauvaise retenue du pied de l'agrafe dans la structure de retenue.

La présente invention a pour objectif de pallier ces inconvénients de l'art antérieur. Plus précisément, l'invention a pour objectif de fournir une structure de retenue permettant d'assembler solidement et moyennant des efforts faibles le pied d'ancrage d'un élément d'attache, par exemple une agrafe, à un élément, par exemple en matière plastique.

Ces objectifs, ainsi que d'autres qui apparaîtront plus clairement par la suite, sont atteints à l'aide d'une structure de retenue selon la revendication 1.

Préférentiellement, l'ouverture latérale est limitée par le bord supérieur d'une paroi frontale de la structure de retenue et par le bord entourant l'ouverture de l'encoche de la paroi de maintien.

Avantageusement, le bord supérieur de la paroi frontale présente une saillie formant butée empêchant la sortie involontaire du pied d'ancrage en entrant en contact avec celui-ci lors d'une translation de l'élément d'attache vers l'ouverture de l'encoche, parallèlement à la paroi de maintien.

De préférence, ladite paroi frontale est rigide.

Selon un mode de réalisation préférentiel, le bord entourant l'ouverture de l'encoche de la paroi de maintien présente un chanfrein.

Avantageusement, la structure de retenue comprend au moins une paroi latérale solidarisant la paroi de maintien à la pièce destinée à être montée sur une structure de support.

La présente invention concerne également un dispositif d'attache comportant une structure de retenue telle que décrite ci-dessus, dans lequel est introduite un élément d'attache comportant un pied d'ancrage et un collet séparé du pied d'ancrage par une gorge, le collet étant en appui sur la surface supérieure de la paroi de maintien de la structure de retenue.

Préférentiellement, la largeur de ladite gorge est supérieure à l'épaisseur de la paroi de maintien de la structure de retenue, de façon à ménager un jeu de montage.

L'invention concerne également une pièce destinée à être montée sur une structure de support, comme la carrosserie d'un véhicule, comprenant au moins une structure de retenue d'un élément d'attache telle que décrite ci-dessus.

L'invention concerne également un véhicule automobile comprenant au moins une telle pièce.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue en perspective d'une structure de retenue selon un mode de réalisation de l'invention ;
- la figure 2 est une vue en perspective de la structure de retenue de la figure 1 dans laquelle est inséré une agrafe ;
- la figue 3 est une vue de dessus de la structure de retenue de la figure 1 ;
- la figure 4 est une vue de coupe de la structure de retenue de la figure 1 selon son plan de symétrie, montrant l'agrafe en cours d'insertion dans la structure de retenue ;
- la figure 5 est une vue de coupe de la structure de retenue l'agrafe de la figure 4, montrant l'agrafe insérée dans la structure de retenue.

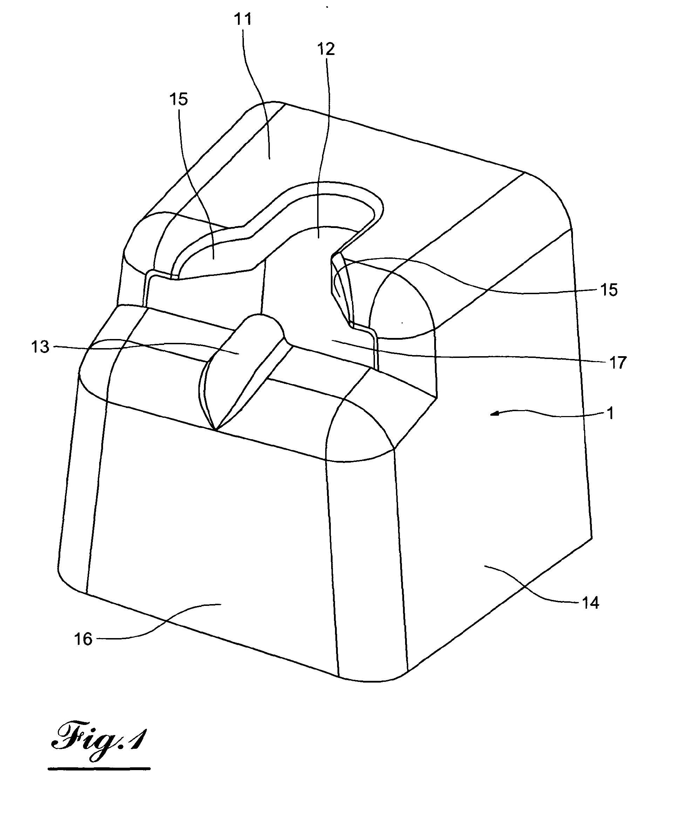

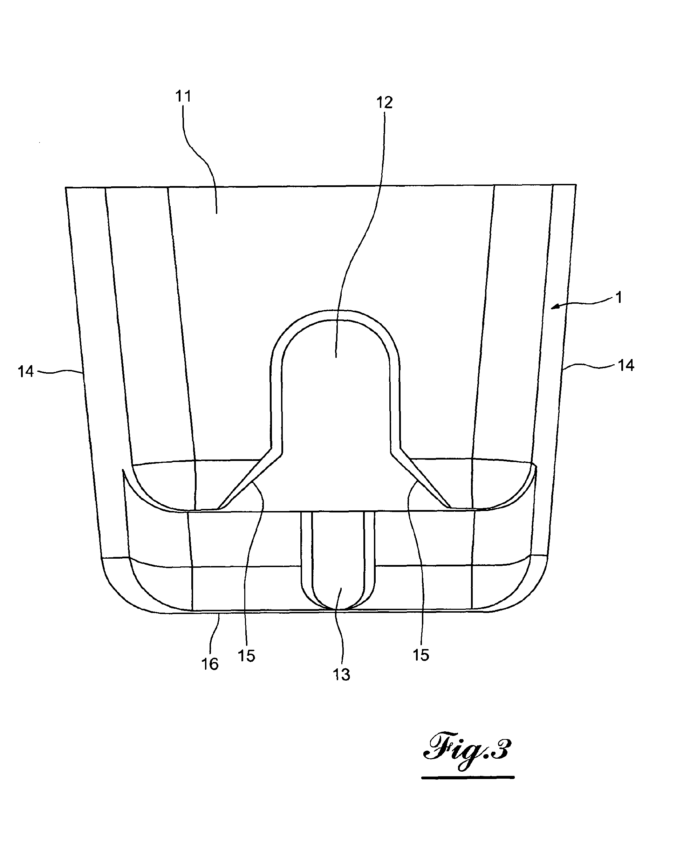

Les figures 1 et 3 montrent une structure de retenue 1 comprenant des parois latérales 14, une paroi frontale 16 et une paroi supérieure de maintien, ou paroi de maintien 11 reliant les bords supérieurs des parois latérales 14. Une encoche 12 est ménagée dans la paroi de maintien 11. Les bords inférieurs des parois latérales 14 et de la paroi frontale 16 peuvent être fixés ou appartenir à une pièce plus complexe, non représentée sur les figures.

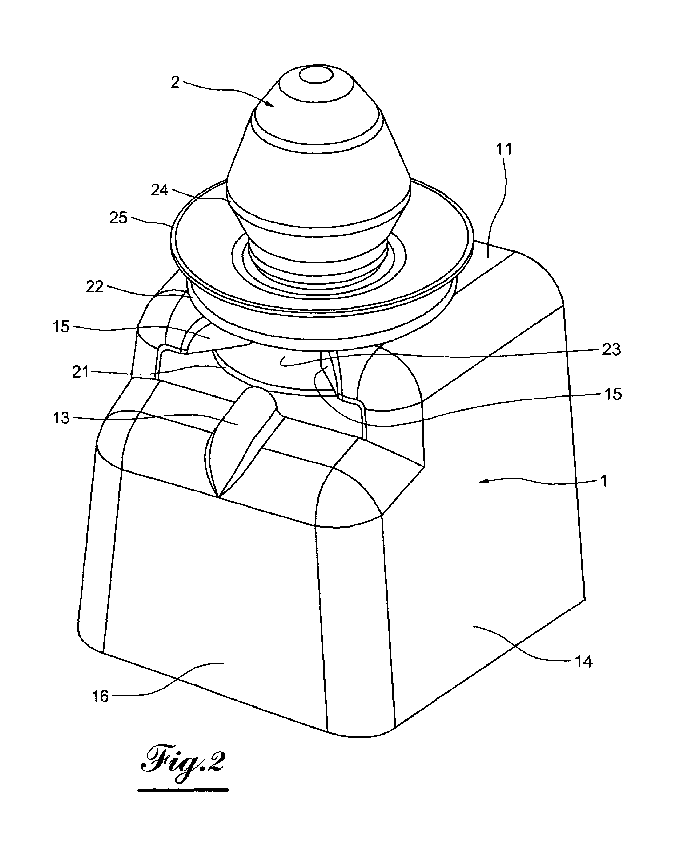

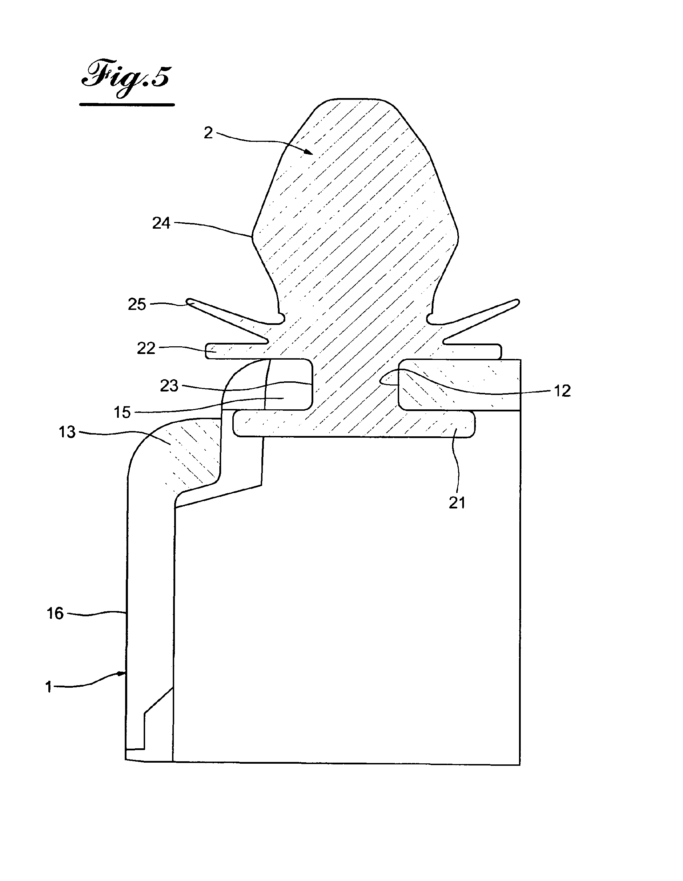

Les figures 2 et 5 montrent cette même structure de retenue dans laquelle est insérée une agrafe 2. Cette agrafe 2 comporte un pied d'ancrage 21 en forme de collet et un collet supérieur 22 séparé du pied d'ancrage 21 par une gorge 23. Elle comprend également une portion d'attache 24 destinée à rentrer en force dans un trou correspondant d'une tôle, et une rondelle d'appui 25 destinée à être en appui contre cette tôle.

Quand l'agrafe 2 est insérée dans la structure de retenue 1, son pied d'ancrage 21 est en contact avec la surface inférieure de la paroi de maintien 11, son collet supérieur 22 est en contact, aux jeux d'assemblage près, avec la surface supérieure de la paroi de maintien 11, et la gorge 23 est insérée dans l'encoche 12 de la paroi de maintien 11. Ainsi, la paroi de maintien 11 de la structure de retenue 1 immobilise l'agrafe 2 dans la direction de son axe. Elle l'immobilise également dans les directions perpendiculaires à son axe, sauf dans la direction d'ouverture de l'encoche 12. Cette ouverture de l'encoche 12 permet donc l'insertion de l'agrafe 2 dans la structure de retenue 1 et le cas échéant son retrait.

Une butée 13, placée sur le bord supérieur de la paroi frontale 16 de la structure de retenue 1 permet de bloquer la translation de l'agrafe dans la direction de l'ouverture de l'encoche 12 quand elle est en place dans la structure de retenue, en entrant en contact avec le pied d'ancrage 21 de cette agrafe. Il est à noter que cette butée 13, ainsi que la paroi frontale 16 qui la porte, ne sont pas conçues pour être facilement déformable.

Pour insérer le pied d'ancrage 21 de l'agrafe 2 dans la structure de retenue 1, il est nécessaire qu'il contourne la butée 13. Pour cela, le pied d'ancrage passe dans une ouverture latérale d'insertion 17 délimitée par le bord supérieur de la paroi frontale 16 de la structure de retenue 1 et le bord entourant l'ouverture de l'encoche 12 de la paroi de maintien 11.

Cette ouverture latérale d'insertion 17 s'ouvre dans un plan sensiblement perpendiculaire à la surface de la paroi de maintien 11. Ainsi, l'introduction du pied d'ancrage 17 se fait dans une direction sensiblement parallèle à cette surface de la paroi de maintien 11. Dans l'exemple présenté, le plan de cette ouverture latérale d'insertion 17 est en retrait par rapport à la paroi frontale 16, dont le bord supérieur forme une marche devant l'ouverture 17. La butée 13 qui est portée par ce bord supérieur est ainsi placée devant l'ouverture latérale d'insertion 17.

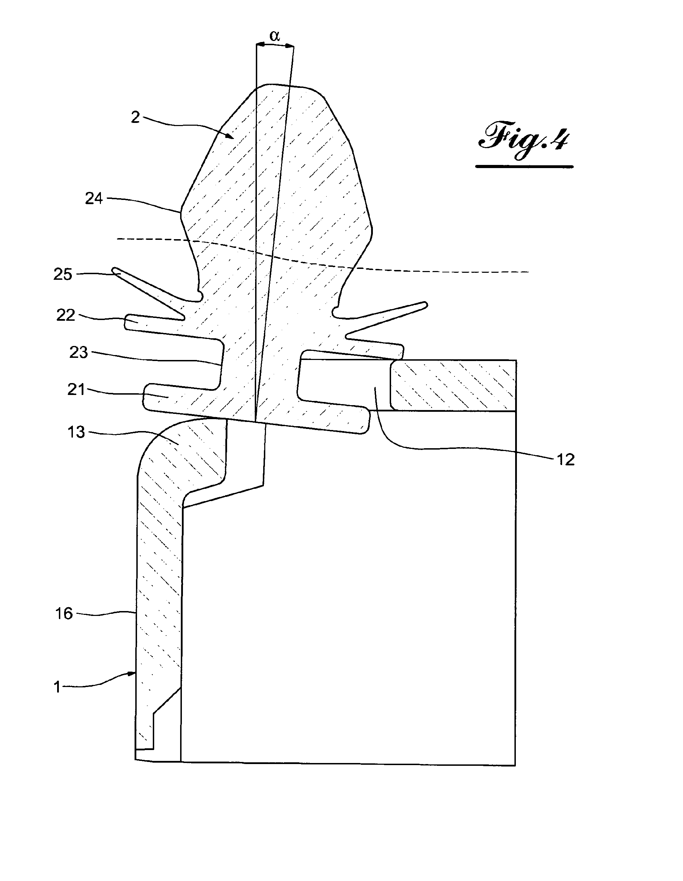

Les bords de l'ouverture latérale d'insertion 17 permettent cependant de guider le pied d'ancrage 21 de l'agrafe 2 le long d'une trajectoire courbe, schématisée en pointillés sur la figure 4, lui permettant de passer par cette ouverture latérale d'insertion sans déformer de façon sensible ni l'agrafe ni la structure de retenue. Comme le montre la figure 4, pendant son insertion dans la structure de retenue 1, l'agrafe 2 est inclinée, son axe longitudinal formant un angle α faible mais non nul avec la perpendiculaire à la surface de la paroi de maintien 11. Cet angle α, qui est variable suivant la position de l'agrafe 2 sur sa trajectoire, permet l'insertion du pied d'ancrage 21 de l'agrafe sans déformation sensible de la butée 13.

L'engagement du pied d'ancrage 21 et du collet supérieur 22 de l'agrafe 2 de part et d'autre de la paroi de maintien 11 de la structure de retenue 1 se fait donc alors que ces éléments ne sont pas parfaitement parallèles à la paroi de maintien 11. Cet engagement est rendu possible par les jeux existants entre le pied d'ancrage 21 et le collet supérieur 22 de l'agrafe, la gorge 23 ayant une largeur légèrement supérieure à l'épaisseur de la paroi de maintien 11. Cet engagement est également facilité par des chanfreins 15 ménagés sur les bords de la paroi de maintien 11 et entourant l'ouverture de l'encoche 12 dans cette paroi.

Enfin, si besoin, cette introduction peut se faire en générant une très légère déformation du pied d'ancrage 21, du collet supérieur 22 de l'agrafe 2 et/ou de la paroi de maintien 11. Cette déformation reste en tout état de cause très faible et ne nécessite donc qu'une énergie faible.

L'introduction du pied d'ancrage de l'agrafe 2 dans la structure de retenue 1 se fait donc sans déformation sensible de la butée 13. En conséquence, cette introduction nécessite un effort très faible, et en particulier plus faible que si elle introduisait la déformation d'une butée sur une distance importante. L'introduction de l'agrafe dans la structure de retenue 1 selon l'invention est donc plus facile que dans les structures de retenue de l'art antérieur.

Quant l'agrafe est en position, si elle subit un effort tendant à la faire sortir de l'encoche 1, son pied d'ancrage 21 rentre en contact avec la butée 13 de la structure de retenue 1. Cette butée étant conçue pour être rigide, elle peut exercer sur le pied d'ancrage 21 un effort de retenue très important. L'agrafe 2 est donc maintenue en position de façon très efficace.

Pour sortir l'agrafe 2 de l'encoche 12, il est nécessaire de lui imprimer un angle α permettant à son pied d'ancrage de contourner la butée 13 et de passer par l'ouverture latérale d'insertion 17. Cependant, quand l'agrafe 2 est dans la structure de retenue 1, aucun élément ne la guide pour prendre l'angle α nécessaire.

Au contraire, une pression sur la portion d'attache 24 de l'agrafe 2 dans la direction de l'ouverture de l'encoche 12 a pour effet de générer sur l'agrafe 2 un moment tendant à incliner l'agrafe 2 dans la direction contraire à l'angle nécessaire pour contourner la butée 13. Un retrait accidentel de l'agrafe 2 de la structure de retenue est donc rendu impossible.

La présente invention a donc pour effet de rendre très facile l'introduction du pied d'ancrage de l'agrafe dans sa structure de retenue, tout en garantissant un maintien très fiable de ce pied d'ancrage de l'agrafe. Bien entendu, l'homme du métier pourra adapter l'invention sans difficulté, par exemple en la mettant en oeuvre pour d'autres éléments d'attache, comme des vis. Dans ce dernier cas, la tête de vis pourrait par exemple être coincée sous la paroi de maintien 11, et bloquée en translation selon son axe longitudinal par un appui adapté situé sous l'encoche 12.

## Revendications

1. Structure de retenue d'un élément d'attache (2), l'élément d'attache comprenant un pied d'ancrage (21) et une portion d'attache (24) à une structure de support, la structure de retenue étant solidaire d'une pièce destinée à être montée sur la structure de support, et comportant une paroi de maintien (11) présentant une encoche d'insertion (12) destinée à recevoir l'élément d'attache (2) perpendiculairement à la paroi de maintien (11), son pied d'ancrage (21) étant en appui sous la paroi de maintien (11),
la structure de retenue présentant également une ouverture latérale (17) d'insertion du pied d'ancrage (21) sous la paroi de maintien (11), l'insertion du pied d'ancrage (21) se faisant dans une direction sensiblement parallèle à la surface de la paroi de maintien (11), une partie opposée à l'ouverture de l'encoche (12) du bord de cette ouverture latérale (17) formant butée (13) pour empêcher la sortie involontaire du pied d'ancrage (21) ;
**caractérisée en ce que** la butée (13) est rigide et est placée devant l'ouverture latérale (17) de façon à laisser passer le pied d'ancrage (21), sans déformation sensible de la butée, lors de l'insertion de l'élément d'attache (2) dans l'encoche (12) uniquement si l'élément d'attache (2) est incliné d'un angle (α) faible mais non nul par rapport à la perpendiculaire à la surface de la paroi de maintien (11).

2. Structure de retenue selon la revendication 1, **caractérisée en ce que** l'ouverture latérale (17) est limitée par le bord supérieur d'une paroi frontale (16) de la structure de retenue et par le bord entourant l'ouverture de l'encoche (12) de la paroi de maintien (11).

3. Structure de retenue selon la revendication 2, **caractérisée en ce que** le bord supérieur de la paroi frontale (16) présente une saillie formant butée (13) empêchant la sortie involontaire du pied d'ancrage (21) en entrant en contact avec celui-ci lors d'une translation de l'élément d'attache (2) vers l'ouverture de l'encoche (12), parallèlement à la paroi de maintien (11).

4. Structure de retenue selon la revendication 3, **caractérisée en ce que** ladite paroi frontale (16) est rigide.

5. Structure de retenue selon l'une quelconque des revendications 1 à 4, **caractérisée en ce que** le bord entourant l'ouverture de l'encoche (12) de la paroi de maintien (11) présente un chanfrein (11).

6. Structure de retenue selon l'une quelconque des revendications 1 à 5, **caractérisée en ce qu'**elle comprend au moins une paroi latérale (14) solidarisant la paroi de maintien (11) à la pièce destinée à être montée sur une structure de support.

7. Dispositif d'attache **caractérisé en ce qu'**il comporte une structure de retenue (1) selon l'une quelconque des revendications 1 à 6, dans laquelle est introduite un élément d'attache (2) comportant un pied d'ancrage (21) et un collet (22) séparé du pied d'ancrage (21) par une gorge (23), le collet (22) étant en appui sur la surface supérieure de la paroi de maintien de la structure de retenue.

8. Dispositif d'attache selon la revendication 7, **caractérisé en ce que** la largeur de ladite gorge (23) est supérieure à l'épaisseur de la paroi de maintien (11) de la structure de retenue (1), de façon à ménager un jeu de montage.

9. Pièce destinée à être montée sur une structure de support, comme la carrosserie d'un véhicule, **caractérisée en ce qu'**elle comprend au moins une structure de retenue (1) d'un élément d'attache (2) selon l'une quelconque des revendications 1 à 6.

10. Véhicule automobile **caractérisé en ce qu'**il comprend au moins une pièce selon la revendication 9.

## Patentansprüche

1. Haltestruktur für ein Befestigungselement (2),wobei das Befestigungselement einen Verankerungsfuß (21) und einen Befestigungsabschnitt (24) an einer Stützstruktur umfasst, wobei die Haltestruktur mit einem Teil fest verbunden ist, das zur Montage auf der Stützstruktur bestimmt ist, und eine Haltewand (11) aufweist, die eine Einsetzaussparung (12) aufweist, die zum Empfang des Befestigungselements (2) senkrecht zur Haltewand (11) bestimmt ist, wobei sich sein Verankerungsfuß (21) unter der Haltewand (11) abstützt,
wobei die Haltestruktur ebenfalls eine seitliche Einsetzöffnung (17) des Verankerungsfußes (21) unter der Haltewand (11) aufweist, wobei das Einsetzen des Verkankerungsfußes (21) in einer etwa parallelen Richtung zur Fläche der Haltewand (11)erfolgt, wobei ein zur Öffnung der Aussparung (12) gegenüberliegender Teil des Rands dieser seitlichen Öffnung (17) einen Anschlag (13) bildet, um den unbeabsichtigten Austritt des Verankerungsfußes (21) zu verhindern,
**dadurch gekennzeichnet, dass** der Anschlag (13) starr ist und vor der seitlichen Öffnung (17) derart platziert ist, dass der Verankerungsfuß (21) ohne merkliche Verformung des Anschlags beim Einsetzen des Befestigungselement (2) in die Aussparung (12) nur dann passieren kann, wenn das Befestigungselement (2) in einem Winkel (α), der im Verhältnis zur Senkrechten zur Fläche der Haltewand (11) klein, aber nicht null ist, geneigt ist.

2. Haltestruktur nach Anspruch 1, **dadurch gekennzeichnet, dass** die seitliche Öffnung (17) von dem oberen Rand einer vorderen Wand (16) der Haltestruktur und von dem Rand, der die Öffnung der Aussparung (12) der Haltewand (11) umgibt, begrenzt ist.

3. Haltestruktur nach Anspruch 2, **dadurch gekennzeichnet, dass** der obere Rand der vorderen Wand (16) einen Vorsprung aufweist, der einen Anschlag (13) bildet, der den unbeabsichtigten Austritt des Verankerungsfußes (21) durch Inkontakttreten mit diesem bei einer Verschiebung des Befestigungselements (2) zur Öffnung der Aussparung (12) parallel zur Haltewand (11) verhindert.

4. Haltestruktur nach Anspruch 3, **dadurch gekennzeichnet, dass** die vordere Wand (16) starr ist.

5. Haltestruktur nach einem der Ansprüche 1 bis 4, **dadurch gekennzeichnet, dass** der die Öffnung der Aussparung (12) der Haltewand (11) umgebende Rand eine Schräge (11) aufweist.

6. Haltestruktur nach einem der Ansprüche 1 bis 5, **dadurch gekennzeichnet, dass** sie mindestens eine Seitenwand (14) umfasst, die die Haltewand (11) mit dem Teil fest verbindet, das zur Montage auf einer Stützstruktur bestimmt ist.

7. Befestigungsvorrichtung, **dadurch gekennzeichnet, dass** sie eine Haltestruktur (1) nach einem der Ansprüche 1 bis 6 aufweist, in welche ein Befestigungselement (2) eingeführt ist, das einen Verankerungsfuß (21) und einen vom Verankerungsfuß (21) durch eine Nut (23) getrennten Kragen (22) aufweist, wobei sich der Kragen (22) auf der oberen Fläche der Haltewand der Haltestruktur abstützt.

8. Befestigungsvorrichtung nach Anspruch 7, **dadurch gekennzeichnet, dass** die Breite der Nut (23) größer als die Stärke der Haltewand (11) der Haltestruktur (1) ist, so dass ein Montagespiel ausgebildet ist.

9. Teil, das zur Montage auf einer Stützstruktur wie einer Karosserie eines Fahrzeugs bestimmt ist, **dadurch gekennzeichnet, dass** es mindestens eine Haltestruktur (1) eines Befestigungselements (2) nach einem der Ansprüche 1 bis 6 umfasst.

10. Kraftfahrzeug, **dadurch gekennzeichnet, dass** es mindestens ein Teil nach Anspruch 9 umfasst.

## Claims

1. A holding structure for a fastening element (2), the fastening element comprising an anchoring foot (21) and a fastening portion (24) for fastening to a support structure, the holding structure being secured to a part designed to be mounted on the support structure, and including a maintaining wall (11) having an insertion notch (12) designed to receive the fastening element (2) perpendicular to the maintaining wall (11), its anchoring foot (21) bearing below the maintaining wall (11),
the holding structure also having a side opening (17) for the insertion of the anchoring foot (21) below the maintaining wall (11), the insertion of the anchoring foot (21) being done in a direction substantially parallel to the surface of the maintaining wall (11), a part opposite the opening of the notch (12) of the edge of that side opening (17) forming a stop (13) to prevent the involuntary withdrawal of the anchoring foot (21);
**characterized in that** the stop (13) is rigid and is located in front of the side opening (17) so as to allow the anchoring foot (21) to pass, without substantial deformation of the stop, during the insertion of the fastening element (2) in the notch (12) only if the fastening element (2) is inclined by a small, but non-zero angle (α) perpendicular to the surface of the maintaining wall (11).

2. The holding structure according to claim 1, **characterized in that** the side opening (17) is limited by the upper edge of a front wall (16) of the holding structure and by the edge surrounding the opening of the notch (12) of the maintaining wall (11).

3. The holding structure according to claim 2, **characterized in that** the upper edge of the front wall (16) has a protrusion forming a stop (13) preventing the involuntary withdrawal of the anchoring foot (21) when coming into contact with the latter during a translation of the fastening element (2) toward the opening of the notch (12), parallel to the maintaining wall (11).

4. The holding structure according to claim 3, **characterized in that** said front wall (16) is rigid.

5. The holding structure according to any one of claims 1 to 4, **characterized in that** the edge surrounding the opening of the notch (12) of the holding wall (11) has a bevel (11).

6. The holding structure according to any one of claims 1 to 5, **characterized in that** it comprises at least one side wall (14) securing the maintaining wall (11) to the part designed to be mounted on a support structure.

7. A fastening device, **characterized in that** it includes a holding structure (1) according to any one of claims 1 to 6, wherein a fastening element (2) is inserted including an anchoring foot (21) and a collar (22) separated from the anchoring foot (21) by a groove (23), the collar (22) bearing on the upper surface of the maintaining wall of the support structure.

8. The fastening device according to claim 7, **characterized in that** the width of said groove (23) is greater than the thickness of the maintaining wall (11) of the support structure (1), so as to arrange assembly play.

9. A part designed to be mounted on a support structure, such as a vehicle body, **characterized in that** it comprises at least one holding structure (1) of a fastening element (2) according to any one of claims 1 to 6.

10. A motor vehicle, **characterized in that** it comprises at least one part according to claim 9.
